# EUROPÄISCHE PATENTSCHRIFT

(11) **EP 1 194 206 B1**
(45) Veröffentlichungstag und Bekanntmachung des Hinweises auf die Patenterteilung: **06.04.2005**
(21) Anmeldenummer: 01944910.7
(22) Anmeldetag: 05.05.2001
(51) Int. Cl.: B01D 35/00, F02M 37/22

(54) **FILTER, SOWIE FILTEREINSATZ DAFÜR, MIT DIREKTDICHTUNG**
FILTER AND CORRESPONDING FILTER INSERT WITH DIRECT SEALING
FILTRE, ET SON ELEMENT FILTRANT, AVEC ETANCHEITE DIRECTE

(30) Priorität: 05.05.2000 DE 20008113 U; 31.01.2001 DE 20101574 U
(43) Veröffentlichungstag der Anmeldung: 10.04.2002
(73) Patentinhaber: Hengst GmbH & Co. KG, 48147 Münster (DE)
(72) Erfinder: ARDES, Wilhelm, 59387 Ascheberg (DE); SCHACHTRUP, Ludger, 48163 Münster (DE); HASENKAMP, Johannes, 48145 Münster (DE)
(74) Vertreter: Habbel, Ludwig (Lutz), Dipl.-Ing.
(86) Internationale Anmeldenummer: PCT/DE2001/001718
(87) Internationale Veröffentlichungsnummer: WO 2001/085304

(56) Entgegenhaltungen:
- WO-A-97/15370
- DE-A- 19 605 425
- DE-A- 19 711 531
- DE-A- 19 806 929
- US-A- 5 858 227

## Beschreibung

Die Erfindung betrifft einen Flüssigkeitsfilter nach dem Oberbegriff des Anspruches 1 sowie einen zur Verwendung in einem derartigen Filter geeigneten Filtereinsatz. Die Filter können insbesondere als Öl- und Kraftstofffilter ausgestaltet sein.

Aus der DE 195 19 352 C2 ist ein Kraftstofffilter bekannt. Dabei kann das Problem auftreten, insbesondere bei Verwendung für Dieselmotoren, dass sogenannter Biodiesel-Kraftstoff auf Rapsölbasis das Dichtungsmaterial belastet, welches beispielsweise zur Abdichtung zwischen Roh- und Reinseite des Filters vorgesehen ist. Nur unter Verwendung vergleichsweise teurer Werkstoffe lassen sich spezielle Dichtungen schaffen, die gegenüber derartigen Flüssigkeiten ausreichend beständig sind.

Durch Ausgestaltung eines entsprechenden Dichtkragens direkt an einem der ohnehin für den Filter vorgesehenen Bauteile ist eine zuverlässige Abdichtung auch ohne spezielle Dichtungswerkstoffe erzielbar. Die Verwendung teurer Dichtungswerkstoffe kann eingespart werden, ebenso - durch Verringerung der Bauteilzahlen - die Handhabung einer eigenen Dichtung zur festen Verbindung bzw. Montage der Dichtung mit bzw. an anderen, ohnehin vorgesehenen Filterbauteilen. Hierzu wird an der vorgesehenen Dichtlinie ein Dichtungskragen geschaffen, der zusammen-mit-der ihm zugeordneten Dichtfläche die erforderliche Abdichtung übernimmt. Das Bauteil, an dem der Dichtungskragen vorgesehen ist, ist ohnehin gegen die zu filternde Flüssigkeit beständig, so dass die Beständigkeit der Dichtung auf einfachere und insbesondere erheblich kostengünstige Weise sichergestellt ist, als wenn speziell geeignete Dichtungsmaterialien ausgesucht und bei der Filterherstellung verwendet werden müssten.

Aus der DE-A-198 06 929 ist ein Kraftstofffilter bekannt, bei dem der Filtereinsatz an zwei Endscheiben jeweils einen Dichtungskragen aufweist. Der Dichtungskragen besteht aus einem Ring mit etwa U-förmigem Querschnitt, wobei die Enden der beiden Schenkel dieses U zwei hintereinander angeordnete Dichtungen schaffen. Diese beiden Schenkel sind gleichstark ausgestaltet und weisen dementsprechend gleiche Verformbarkeiten auf. Insbesondere dort, wo der Dichtkragen dem Bauteil anliegt, welches die zugeordnete Dichtfläche bildet, weisen die beiden Schenkel des Dichtkragens eine Balligkeit auf, so dass hier eine vergleichsweise geringe Verformbarkeit gegeben ist.

Die US-A-5 858 227 beschreibt einen Kraftstofffilter, bei dem ein radial umlaufender Dichtungskragen materialeinheitlich mit einer Endscheibe des Filtereinsatzes ausgestaltet ist. Eine doppelte Dichtung ist hier nicht vorgesehen.

Die DE-A-197 11 531 zeigt einen Kraftstofffilter, bei dem zwei an eine Endscheibe angeformte Rohrstutzen zwei in Reihe geschaltete Dichtungen darstellen, die mit weiteren Bauteilen des Filters zusammenwirken. Diese beiden Rohrstutzen sind weit voneinander entfernt, wirken mit zwei unterschiedlichen Dichtflächen des übrigen Filters zusammen und weisen einen zusätzlichen Funktionsbereich zwischen sich auf, so daß sie nicht zwei Bestandteile einer Dichtung bilden, sondern zwei getrennte und unabhängige Dichtungen darstellen. Die Rohrstutzen weisen gleiche Querschnitte auf und auch innerhalb jedes Rohrstutzens sind die Querschnittsabmessungen über die Länge des Rohrstutzens gleich, ohne Bereich unterschiedlicher Verformungseigenschaften zu schaffen.
Aus der WO 97/15370 ist ein Ölfilter bekannt, beispielsweise für Hydrauliköl oder für Schmieröl von Verbrennungsmotoren, wobei auch diese Druckschrift einen einzigen materialeinheitlich an eine Endscheibe des Filtereinsatzes angeformten Dichtkragen zeigt. Zwei hintereinandergeschaltete Dichtungen sind nicht vorgesehen.

Aus der DE-A-196 05 425 ist an einer Endscheibe eines Filtereinsatzes für einen Flüssigkeitsfilter ein Dichtungskragen vorgesehen, der mit einem etwa pilzförmigen Ventilkörper eines Filterumgehungsventils zusammenwirkt. Zwei hintereinander geschaltete Dichtungen sind nicht vorgesehen; vielmehr soll das Filterumgehungsventil bewusst bei Überschreitung eines bestimmten Druckes öffnen.

Der Erfindung liegt die Aufgabe zugrunde, einen gattungsgemäßen Flüssigkeitsfilter dahingehend zu verbessern sowie einen Filtereinsatz zu schaffen, dass auf möglichst preisgünstige Weise eine zuverlässige Abdichtung zwischen der Rohseite und der Reinseite ermöglicht ist.

Diese Aufgabe wird durch einen Filter mit den Merkmalen des Anspruches 1 und durch einen Filtereinsatz mit den Merkmalen des Anspruchs 11 gelöst.

Die Erfindung schlägt mit anderen Worten die Ausgestaltung einer doppelten Dichtung am Dichtungskragen vor, wobei zusätzlich zu der grundsätzlichen Kontur des Dichtungskragens ein leichter verformbarer Abschnitt vorgesehen ist:

Der Dichtungskragen des Flüssigkeitsfilters weist einen schmalen Abschnitt auf, der bei den für den Filter vorgesehenen Betriebsbedingungen verformbar ist. Beispielsweise kann eine etwa dreieckige Kontur des Dichtungskragens vorgesehen sein, deren Spitze den leichter verformbaren Abschnitt bildet. So ist auch bei Werkstoffen, die nicht wie Elastomere ausdrücklich verformbar sein sollen, eine zuverlässige Anlage des Dichtungskragens an der zugeordneten Dichtfläche sichergestellt. Insbesondere bei einem Ölfilter treten Temperaturen und Drücke auf, die eine derartige Verformung begünstigen können.

Dieser verformbare Abschnitt weicht als Fortsatz von der grundsätzlichen Kontur des Dichtungskragens ab. So kann ein etwa rechteckiger oder trapezoider Querschnitt als Kontur des Dichtungskragens vorgesehen sein, der eine vergleichsweise großflächige Anlage an der Dichtfläche ermöglicht, jedoch aufgrund seines massiven Querschnittes möglicherweise nur geringfügig verformbar ist.

Eine von dieser grundsätzlichen Kontur durch eine Nut beabstandete Lippe wird nachfolgend als Fortsatz bezeichnet und kann die gewünschte Verformbarkeit bei den für den Filter vorgesehenen Betriebsbedingungen ermöglichen. Auf diese Weise wird durch die großflächige Anlage einerseits und durch den verformbaren Fortsatz andererseits eine doppelte und besonders zuverlässige Dichtung bewirkt. Dies gilt besonders, wenn der Dichtungskragen und der Fortsatz demselben die Dichtfläche bildenden Bauteil anliegen, also eine eventuelle Leckage durch eine Bauteilfuge ausgeschlossen ist.

Vorteilhaft kann der Flüssigkeitsfilter in an sich bekannter Weise mit einem zentralen Rücklaufrohr für die Flüssigkeit versehen sein und mit einem Filtereinsatz, der das Rücklaufrohr umgibt und einen ringförmigen Querschnitt aufweist. Derartige Filteranordnungen sind aus dem Bereich der Kraftstofffilter bekannt, z. B. in Form des gattungsbildenden Filters, wobei das Rücklaufrohr als Teil einer permanenten Entlüftungsanordnung dazu dient, Luft zusammen mit dem Rücklaufstrom des Kraftstoffes in den Kraftstofftank zu befördern, so dass Lufteinschlüsse auf der Reinseite des Flüssigkeitsfilters, wo der gefilterte Kraftstoff zu beispielsweise einer Einspritzpumpe gefördert wird, vermieden werden.

Bei einer derartigen, an sich bekannten Anordnung kann neuerungsgemäß vorgesehen sein, die Endscheibe des Filtereinsatzes, die üblicherweise aus Kunststoff besteht, mit einer zentralen Öffnung zu versehen, durch die sich das obere Ende ralen Öffnung zu versehen, durch die sich das obere Ende des Rücklaufrohres erstreckt, wobei in einem Kontaktbereich zwischen Rücklaufrohr und Endscheibe die Abdichtung zwischen Roh- und Reinseite des Filters vorgesehen ist. Zu diesem Zweck kann die Endscheibe den erwähnten, angeformten Dichtkragen aufweisen. Die Entlüftungsbohrung ist dabei in dem Teil des Rücklaufrohres vorgesehen, welcher sich durch die Endscheibe des Filtereinsatzes erstreckt und in die Rohseite des Filters ragt.

Alternativ kann die Endscheibe des Filtereinsatzes das Entlüftungsrohr vollständig überdecken, wobei dann in der Endscheibe des Filtereinsatzes die Entlüftungsbohrung vorgesehen ist. Der Flüssigkeitsstrom, der durch die Bohrung gelangt und ggf. Luftblasen mit sich führt, gelangt anschließend durch eine Eintrittsöffnung in das Rücklaufrohr. Die Abdichtung zwischen der Endscheibe des Filtereinsatzes und dem Rücklaufrohr weist bei dieser Alternative den Vorteil auf, dass entlang der Abdichtungslinie am Dichtkragen nicht die Druckverhältnisse von Roh- und Reinseite herrschen, sondern von Rein- und der Flüssigkeitsrücklaufseite. Durch den größeren Differenzdruck zwischen Reinseite und Rücklaufseite wird das Prinzip der druckunterstützten Abdichtung optimal ausgenutzt, d. h. der Dichtkragen wird optimal an die ihm zugeordnete Dichtfläche angedrückt.

Ggf. kann unterstützend oder an Stelle eines derartigen flüssigkeitsbedingten Anpressdrucks vorgesehen sein, die beiden Bauteile federbelastet aneinander zu pressen, um die Abdichtung zu gewährleisten. Hierzu kann eine eigene Feder aus Metall, einem Elastomer od. dergl. vorgesehen sein. Es kann jedoch auch eines der beiden Bauteile selbst federelastisch sein und die gewünschten Anpresskräfte bereitstellen: z. b. kann die Endscheibe eines Filtereinsatzes gebogen verlaufen, um im Einbauzustand eine Federvorspannung zu bewirken und dem Stützdom federnd angepresst anzuliegen, oder der Stützdom kann - beispielsweise federbalgartig - in axialer Richtung federbeweglich ausgestaltet sein.

Kostengünstig kann die Montage des Filters durch Verringerung der Bauteilzahl vereinfacht werden, indem das Rücklaufrohr, falls ein an sich bekannter Stützdom vorgesehen ist, einteilig zusammen mit diesem als gemeinsames Bauteil zusammengefasst wird.

Weitere vorteilhafte Ausgestaltungen der Neuerung sind den Ansprüchen entnehmbar.

Die Erfindung wird im folgenden anhand von Ausführungsbeispielen näher erläutert; dabei zeigen
- Fig. 1 und 2: zwei Ausführungsbeispiele von als Kraftstofffilter ausgestalteten Flüssigkeitsfiltern für Verbrennungsmotoren,
- Fig. 3: einen Filtereinsatz,
- Fig. 4: den Filtereinsatz von Fig. 3 in seiner Betriebsstellung insofern, dass die Dichtung des Filtereinsatzes an weiteren Filterbauteilen anliegt, und
- Fig. 5: einen Ausschnitt der Situation von Figur 2 in gegenüber Figur 2 vergrößertem Maßstab.

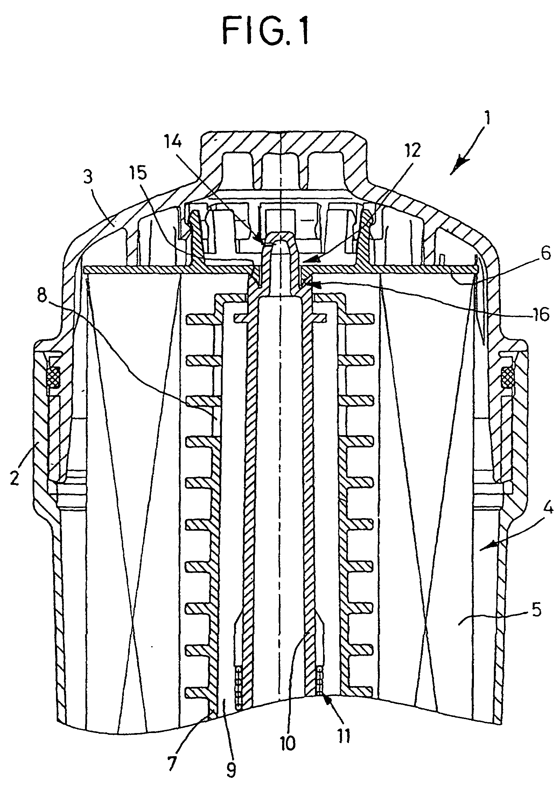

In Fig. 1 ist mit 1 allgemein ein Flüssigkeitsfilter bezeichnet, der lediglich ausschnittsweise dargestellt ist. Auf ein Filtergehäuse 2 ist ein Deckel 3 lösbar aufgeschraubt, so dass ein Filtereinsatz 4 ausgewechselt werden kann. Der Filtereinsatz 4 besteht aus dem eigentliche Filtermedium 5, beispielsweise in Form eines Papierfaltenfilterelementes, sowie aus zwei stimseitigen Endscheiben, von denen die obere Endscheibe 6 dargestellt ist.

Im Gegensatz zu diesem auswechselbaren Bauteil ist im Inneren des Filtereinsatzes 4 ein Stützdom 7 filterfest angeordnet, an welchen sich das Filtermedium 5 bei den während des Betriebs des Filters herrschenden Druck- und Temperaturverhältnissen anlegen kann, so dass der Filtereinsatz 4 preisgünstig und mit wenig Materialbedarf hergestellt sein kann und dennoch ein Kollabieren des Filtereinsatzes 4 zuverlässig verhindert wird.

Der Stützdom 7 weist mehrere Durchtrittsöffnungen 8 auf, so dass ungefilterter Kraftstoff von radial außen durch das Filtermedium 5 nach radial innen hindurchtreten kann und dort als gefilterter Kraftstoff durch die Durchtrittsöffnungen 8 in einen Kraftstoffauslaß 9 gelangen kann, der zum Motor bzw. zu einer Einspritzpumpe führt. Außerhalb des Filtereinsatzes 4 befindet sich daher die Rohseite des Filters mit ungefiltertem Kraftstoff, während sich im Innenraum des Filtereinsatzes 4 und innerhalb des Stützdomes 7 die Reinseite des Filters befindet.

Innerhalb des Stützdomes 7 ist ein zentrales Rücklaufrohr 10 vorgesehen, welches axial beweglich gelagert ist und durch eine Druckfeder 11 angepresst gepresst wird. Das Rücklaufrohr 10 erstreckt sich mit seiner oberen Spitze durch eine zentrale Öffnung 12, die in der Endscheibe 6 vorgesehen ist, wobei die außerhalb des Filtereinsatzes 4 ragende Spitze des Rücklaufrohres 10 eine Bohrung 14 aufweist, die als Entlüftungsdüse dient. Ein ständiger Strom ungefilterten Kraftstoffes gelangt, ggf. vermischt mit Luftblasen, durch die Bohrung 14 unmittelbar von der Rohseite des Filters in die Tankrücklaufseite, nämlich in das Rücklaufrohr 10, von dem aus der Kraftstoff in den Kraftstofftank zurückfließt.

Die Abdichtung zwischen Roh- und Reinseite erfolgt durch einen Dichtungskragen 15, der an die Endscheibe 6 angeformt ist und einen sich verjüngenden Querschnitt - bei dem dargestellten Ausführungsbeispiel einen dreieckigen Querschnitt - aufweist, wobei das Rücklaufrohr 10 eine Dichtfläche 16 in Form eines Absatzes bzw. einer Schulter ausbildet, die an das Rücklaufrohr 10 angeformt ist.

Der Dichtungskragen 15 besteht materialeinheitlich aus dem selben Werkstoff wie die Endscheibe 6 und ist bei der Herstellung der Endscheibe 6 hergestellt worden, z. B. durch Herstellung der Endscheibe 6 als Spritzgussteil. Der Dichtsitz im Bereich des Dichtungskragens 15 wird einerseits durch das Druckgefälle zwischen Roh- und Reinseite bewirkt, welches die Endscheibe 6 nach unten, also gegen die Dichtfläche 16 drückt, und zweitens durch die Feder 11, welche das Rücklaufrohr 10 nach oben gegen den Dichtungskragen 15 drückt, und drittens dadurch, dass die Verformbarkeit des Dichtungskragens 15 in dem Maße zunimmt, in welchem seine Querschnittsfläche abnimmt, also zur Spitze des Dreiecks hin, so dass eine optimale Anlage an der Dichtfläche 16 ermöglicht ist.

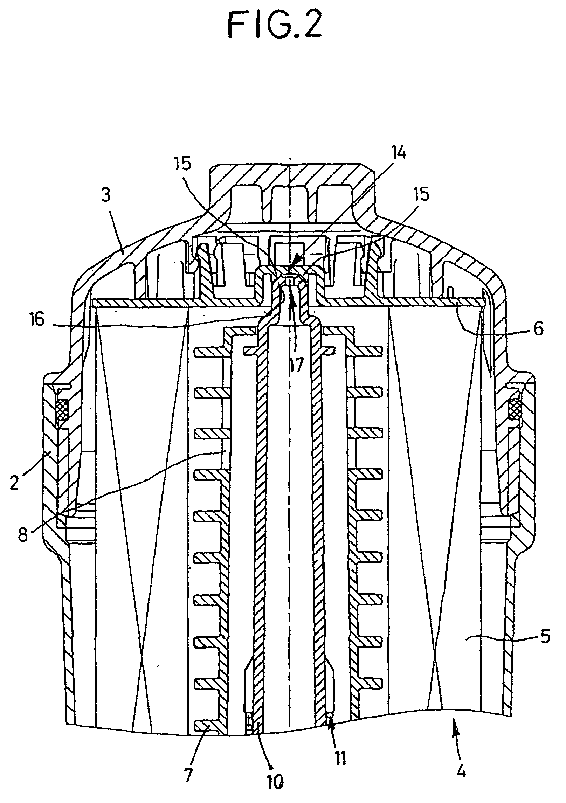

Fig. 2 zeigt ein zweites Ausführungsbeispiel eines Flüssigkeitsfilters 1, welcher ebenfalls als Kraftstofffilter vorgesehen ist, wobei Bauteile mit gleicher Funktion wie beim ersten Ausführungsbeispiel auch in Fig. 2 mit denselben Bezugszeichen wie in der Fig. 1 versehen sind.

Die Endscheibe 6 weist gemäß Fig. 2 nicht eine große zentrale Öffnung auf, sondern eine zentrale Erhöhung, so dass das Rücklaufrohr 10 insgesamt nach oben durch die Endscheibe 6 abgedeckt ist. Die Bohrung 14, die als Entlüftungsdüse dient, ist daher nicht im Rücklaufrohr 10 vorgesehen, sondern in der Endscheibe 6, wobei das Rücklaufrohr 10 eine Eintrittsöffnung 17 aufweist, durch welche der Kraftstoff in das Rücklaufrohr 10 gelangen kann. Der Dichtungskragen 15 ist im Bereich der zentralen Erhöhung der Endscheibe 6 vorgesehen und liegt der obersten, umlaufenden Kante des Rücklaufrohres 10 an, welche die entsprechende Dichtfläche 16 bildet.

Bei dem Ausführungsbeispiel gemäß Fig. 2 steht die Dichtung, die aus dem Dichtungskragen 15 und der zugeordneten Dichtungsfläche 16 besteht, nicht im direkten Kontakt mit der Rohseite des Filters. Sie befindet sich vielmehr hinter der Bohrung 14 in Strömungsrichtung des rücklaufenden Kraftstoffes. Es erfolgt letztlich auch hier durch die Dichtung einer Trennung der Rohseite von der Reinseite des Filters, jedoch unterliegt die Dichtung nicht dem Druckunterschied zwischen Roh- und Reinseite, sondern zwischen Rücklaufseite und Reinseite, so dass ein größeres Druckgefälle auf die Dichtung wirkt und daher den Andruck des Dichtkragens 15 an die Dichtfläche 16 verbessert. Sollte es trotzdem zu einer Leckage im Bereich dieser Abdichtung kommen, würde gefilterter Kraftstoff durch die Dichtung hindurchtreten, in das Rücklaufrohr 10 gelangen und zum Kraftstofftank zurückgeführt werden. Verschmutzungen könnten daher nicht auf die Reinseite des Filters gelangen. Verschmutzungen von der Rohseite gelangen allenfalls durch die Bohrung 14 in den Tankrücklauf, werden also unmittelbar in den Kraftstofftank zurückgeführt. Sollte eine derartige Verschmutzung die Bohrung 14 zusetzen, so wird diese verstopfte Entlüftungsdüse beim nächsten Filterwechsel automatisch erneuert, da sie zusammen mit dem Filtereinsatz ausgetauscht wird, so dass das Problem beim nächsten Filterwechsel automatisch behoben wird.

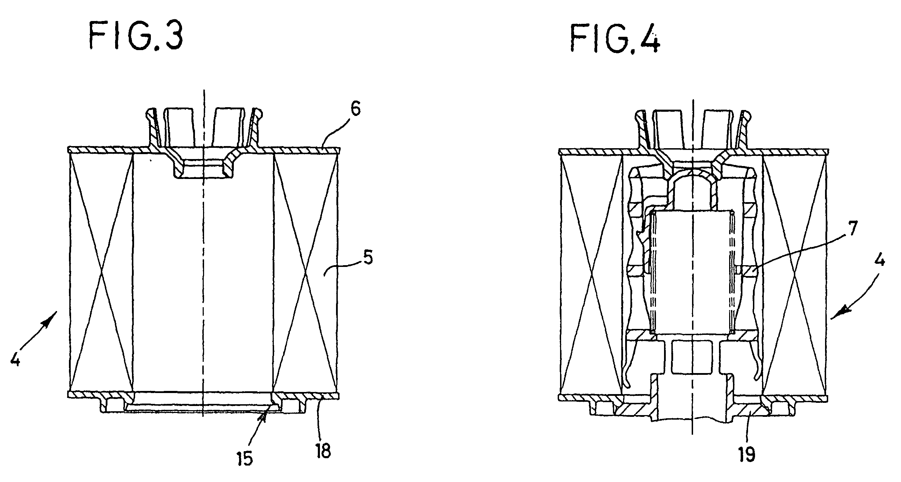

In Figur 3 ist mit 4 allgemein ein Filtereinsatz bezeichnet, der für die Verwendung in einem Ölfilter vorgesehen ist und eine obere Endscheibe 6 aufweist sowie eine untere Endscheibe 18, wobei ein Filtermedium 5 in Form eines Papierfaltenfilterelementes zwischen den beiden Endscheiben 6 und 18 ausgebildet ist. Die untere Endscheibe 18 weist einen umlaufenden ringförmigen Dichtungskragen 15 auf.

In Figur 4 ist der Filtereinsatz 4 auf einen Stützdom 7 aufgesetzt dargestellt, wobei der Stützdom 7 unter den im Betrieb des Filters üblicherweise herrschenden Bedingungen das Kollabieren des Filtermediums 5 verhindert, wenn der Filtereinsatz 4 von außen nach innen radial durchströmt wird. Über diese Stützwirkung hinaus ist der Stützdom 7 nach unten verlängert ausgestaltet, wobei er unterhalb des Filtereinsatzes 4 zusätzliche Ventiloder Steuerfunktionen aufweisen kann. Er weist eine umlaufende Rippe 19 auf, der die untere Endscheibe 18 mit ihrem Dichtungskragen 15 anliegt.

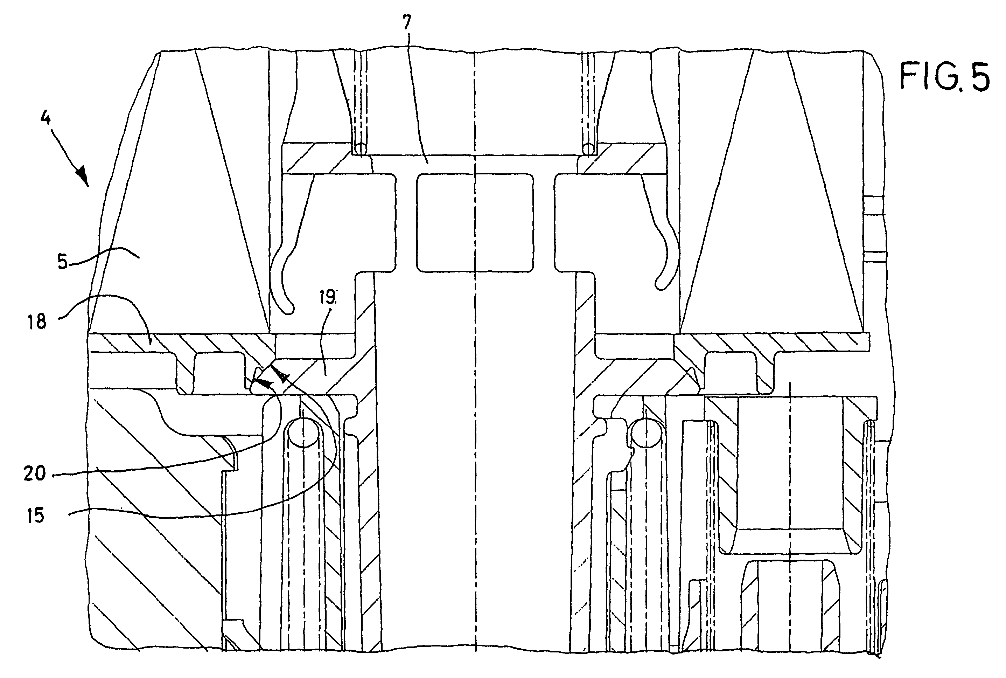

Wie insbesondere aus Figur 5 ersichtlich ist, weist die umlaufende Rippe 19 eine radial äußere Schrägfläche auf, wobei der Dichtungskragen 15 der unteren Endscheibe 18 dieser Schrägfläche in deren oberen Bereich anliegt. Der Dichtungskragen 15 weist einen vergleichsweise massiven Querschnitt auf und ist dementsprechend vergleichsweise geringfügig verformbar, da er aus dem selben Werkstoff wie die untere Endscheibe 18 besteht.

Der Dichtungskragen 15 weist einen Fortsatz 20 auf, der schmaler als die massive grundsätzliche Kontur des Dichtungskragens 15 ausgestaltet ist und daher insbesondere unter den Betriebsbedingungen des Filters, beispielsweise bei einer Öltemperatur von 120 °C, mit geringeren Kräften elastisch verformbar ist als der eigentliche Dichtungskragen 15. Dieser Fortsatz 20 erstreckt sich als radial außerhalb des Dichtungskragens 15 umlaufende Lippe und liegt ebenfalls der Schrägfläche der umlaufenden Rippe 19 an.

Insbesondere kann vorgesehen sein, den Fortsatz 20 so auszugestalten, dass bei einer ersten Montage des Filtereinsatzes 4 zunächst ausschließlich dieser Fortsatz 20 der umlaufenden Rippe 19 anliegt, so dass sich der Fortsatz 20 erst bei der dann folgenden Inbetriebnahme des Filters während der Betriebsverhältnisse verformt und ein Nachsacken des Filtereinsatzes 4 auf den Stützdom 7 ermöglicht, bis der Dichtungskragen 15 der Schrägfläche der umlaufenden Rippe 19 anliegt, so dass in diesem Zustand eine Vorspannung des Fortsatzes 20 sichergestellt ist, die eine zuverlässige Abdichtung gewährleistet, falls im Bereich des Dichtungskragens 15 geringfügige Undichtigkeiten auftreten sollten.

Besonders preisgünstig ist die doppelte Dichtungswirkung dadurch, dass der Fortsatz 20 wie der Dichtungskragen 15 aus dem selben Werkstoff und einteilig als ein Werkstück mit der unteren Endscheibe 18 herstellbar sind.

Abweichend von dem Ausführungsbeispield er Fig. 3 bis 5 kann vorgesehen sein, nicht den Dichtungskragen sondern die Dichtfläche an einer Endscheibe des Filtereinsatzes vorzusehen. Vorteilhaft jedoch wird der Dichtungskragen, insbesondere wenn er einen verformbaren und möglicherweise leichter zu beschädigenden Abschnitt aufweist, zusammen mit dem Filtereinsatz ausgewechselt, während die Dichtfläche an einem als sogenanntes Lebensdauerbauteil im Filter verbleibenden Bauteil vorgesehen ist.

## Patentansprüche

1. Flüssigkeitsfilter (1) für Verbrennungsmotoren, wie Kraftstoff- oder Ölfilter,
mit einem an einem ersten Filterbauteil vorgesehenen Dichtungskragen (15) zur Anlage an einer Dichtfläche (16), welche an einem zweiten Filterbauteil vorgesehen ist,
wobei der Dichtungskragen (15) materialeinheitlich aus dem ersten Filterbauteil gebildet ist
und einen schmalen Abschnitt aufweist, der bei den für den Flüssigkeitsfilter (1) vorgesehenen Betriebsbedingungen verformbar ist,
wobei der Abschnitt als Fortsatz (20) von der grundsätzlichen Kontur des Dichtungskragens (15) abweicht,
und als von dieser grundsätzlichen Kontur durch eine Nut beabstandete Lippe ausgestaltet ist,
**dadurch gekennzeichnet,**
**dass** der Dichtungskragen (15) und der Fortsatz (20), eine doppelte Dichtung bewirkend, demselben die Dichtfläche (16) bildenden Bauteil anliegen.

2. Flüssigkeitsfilter, insbesondere Kraftstofffilter, nach Anspruch 1,
**dadurch gekennzeichnet,**
**dass** eine Entlüftungsanordnung für die vom ansteigenden Flüssigkeitsspiegel verdrängte Luft vorgesehen ist,
wobei die Entlüftungsanordnung eine Bohrung (14) aufweist, welche von der Rohseite des Filters (1 ), wo sich die ungefilterte Flüssigkeit befindet, zu einer Rücklaufleitung führt, wie zu einer Tankrücklaufleitung,
und **dass** ein die Bohrung (14) umgebendes Bauteil, wie die Endscheibe (6) eines ringförmigen, auswechselbaren Filtereinsatzes (4), die Rohseite des Filters (1) gegenüber der Reinseite abdichtet, wo sich die gefilterte Flüssigkeit befindet,
und **dass** dieses Bauteil materialeinheitlich den Dichtungskragen (15) aufweist.

3. Flüssigkeitsfilter nach Anspruch 2, **dadurch gekennzeichnet,**
**dass** die Endscheibe (6) den Dichtungskragen (15) ausbildet,
sowie **gekennzeichnet durch** ein Rücklaufrohr (10) für die Flüssigkeit,
wobei die Endscheibe (6) dem Rücklaufrohr (10) anliegt,
und wobei das Rücklaufrohr (10) die dem Dichtungskragen (15) zugeordnete Dichtfläche (16) ausbildet,
und wobei das Rücklaufrohr (10) sich **durch** eine mittlere Öffnung (12) der Endscheibe (6) erstreckt und die Bohrung (14) aufweist.

4. Flüssigkeitsfilter nach Anspruch 3, **dadurch gekennzeichnet, dass** das Rücklaufrohr (10) eine Kante oder Schulter als die dem Dichtungskragen (15) zugeordnete Dichtfläche (16) aufweist.

5. Flüssigkeitsfilter nach Anspruch 2, **dadurch gekennzeichnet,**
**dass** die Endscheibe (6) den Dichtungskragen (15) ausbildet,
sowie **gekennzeichnet durch** ein Rücklaufrohr (10) für die Flüssigkeit,
wobei die Endscheibe (6) dem Rücklaufrohr (10) anliegt,
und wobei das Rücklaufrohr (10) die dem Dichtungskragen (15) zugeordnete Dichtfläche (16) ausbildet,
und wobei die Endscheibe (6) die Bohrung (14) aufweist und das Rücklaufrohr (10) eine mit der Bohrung (14) kommunizierende Eintrittsöffnung (17) für die Flüssigkeit.

6. Flüssigkeitsfilter nach einem der vorhergehenden Ansprüche, **dadurch gekennzeichnet, dass** das Bauteil, welches den Dichtungskragen (15) aufweist, oder das Bauteil, welches die dem Dichtungskragen (15) zugeordnete Dichtfläche (16) aufweist, federbelastet ist und beweglich gelagert ist, derart, dass der Dichtungskragen (15) und die ihn zugeordnete Dichtfläche (16) durch die Federkraft aneinander gepresst sind.

7. Flüssigkeitsfilter nach Anspruch 6, **dadurch gekennzeichnet, dass** das Bauteil, welches den Dichtungskragen (15) aufweist, oder das Bauteil, welches die dem Dichtungskragen (15) zugeordnete Dichtfläche (16) aufweist, als Feder ausgestaltet ist.

8. Flüssigkeitsfilter nach Anspruch 7, **dadurch gekennzeichnet, dass** eine Endscheibe (6) des Filtereinsatzes (4), im Einbauzustand eine Federvorspannung bewirkend, einen gebogen verlaufenden Querschnitt aufweist.

9. Flüssigkeitsfilter nach einem der Ansprüche 1 bis 5, **dadurch gekennzeichnet, dass** die Bauteile, welche einerseits den Dichtungskragen (15) und andererseits die dem Dichtungskragen (15) zugeordneten Dichtfläche (16) aufweisen, durch den beim Betrieb des Filters herrschenden Flüssigkeitsdruck der zu filternden Flüssigkeit dicht aneinander gepresst sind.

10. Flüssigkeitsfilter nach Anspruch 2, **gekennzeichnet durch** einen ringförmigen Filtereinsatz (4),
sowie **durch** einen Stützdom (7), welcher sich in das Innere des Filtereinsatzes (4) erstreckt,
sowie **durch** ein Rücklaufrohr (10) für die Flüssigkeit, welches im Inneren des Stützdoms (7) verläuft,
wobei das Rücklaufrohr (10) mit dem Stützdom (7) als ein gemeinsames Bauteil ausgestaltet ist, welches die Bohrung (14) aufweist.

11. Filtereinsatz für einen Flüssigkeitsfilter nach einem der vorhergehenden Ansprüche,
wobei der Filter außer dem Filtereinsatz weitere Filterbauteile enthält,
und wobei im Filter eine Dichtung durch zwei Dichtungselemente in Form eines Dichtungskragens und einer korrespondierenden Dichtfläche gebildet wird,
**dadurch gekennzeichnet,**
**dass** der Filtereinsatz eines der beiden Dichtungselemente aufweist,
wobei dieses am Filtereinsatz vorgesehe Dichtungselement materialeinheitlich aus dem das Dichtungselement tragenden Bauteil gebildet ist.

12. Filtereinsatz nach Anspruch 11, **gekennzeichnet durch** Endscheiben (6, 18) und ein dazwischen angeordnetes Filtermedium (5),
wobei an zumindest einer Endscheibe (6, 18) ein ringförmiger Dichtungskragen (15) zur Anlage an weiteren Filterbauteilen vorgesehen ist,
und wobei der Dichtungskragen (15) einen schmalen, ebenfalls ringförmigen Abschnitt aufweist, der bei den für den Filter vorgesehenen Betriebsbedingungen verformbar ist.

13. Filtereinsatz nach Anspruch 12, **dadurch gekennzeichnet, dass** sich der Abschnitt als Fortsatz (20) an den Dichtungskragen (15) anschließt.

14. Filtereinsatz nach Anspruch 12 oder 13, **dadurch gekennzeichnet, dass** der Fortsatz (20) zur abdichtenden Anlage am selben Filterbauteil vorgesehen ist wie der Dichtungskragen (15).

## Claims

1. Fluid filter (1) for internal combustion engines, such as fuel or oil filter having, provided on a first filter component, a sealing collar (15) for contact with a sealing surface (16) provided on a second filter component, whereby the sealing collar (15) is formed from the first filter component and of uniform material and has a narrow section which is deformable according to the operating conditions for the fluid filter (1), whereby the section deviates as a projection (20) from the basic contour of the sealing collar (15), and is formed as a lip separated from this basic contour by a groove, **characterised in that** the sealing collar (15) and the projection (20), effecting a double seal, lie against the same component comprising the sealing surface (16).

2. Fluid filter, in particular fuel filter according to claim 1, **characterised in that** an air-release arrangement for the air displaced by the rising fluid level is provided, whereby the air-release arrangement has a bore (14) which leads from the pipe side of the filter (1), where the unfiltered fluid is situated, to a return pipe, such as a tank return pipe, and that a component surrounding the bore (14) such as the end disk (6) of a ring-shaped interchangeable filter insert (4), seals the pipe side of the filter (1) with respect to the clean side, where the unfiltered fluid is situated, and that this component has the sealing collar (15) of uniform material.

3. Fluid filter according to claim 2, **characterised in that** the end disk (6) comprises the sealing collar (15) and **characterised in that** it has a return tube (10) for the fluid, whereby the end disk (6) lies against the return tube (10), and whereby the return tube (10) forms the sealing surface (16) allocated to the sealing collar (15), and whereby the return tube (10) extends through a central opening (12) of the end disk (6) and has the bore (14).

4. Fluid filter according to claim 3, **characterised in that** the return tube (10) has an edge or shoulder as the sealing surface (16) allocated to the sealing collar (15).

5. Fluid filter according to claim 2, **characterised in that** the end disk (6) comprises the sealing collar (15) and **characterised in that** it has a return tube (10) for the fluid, whereby the end disk (6) lies against the return tube (10), and whereby the return tube (10) forms the sealing surface (16) allocated to the sealing collar (15), and whereby the end disk (6) has the bore (14) and the return tube (10) has an entry opening (17) communicating with the bore (14) for the fluid.

6. Fluid filter according to one of the previous claims, **characterised in that** the component having the sealing collar (15) or the component which has the sealing surface (16) allocated to the sealing collar (15), is spring loaded and is movably borne such that the sealing collar (15) and the sealing surface (16) allocated to it are pressed against each other by the spring force.

7. Fluid filter according to claim 6, **characterised in that** the component that has the sealing collar (15) or the component that has the sealing surface (16) allocated to the sealing collar (15) is designed as a spring.

8. Fluid filter according to claim 7, **characterised in that** an end disk (6) of the filter insert (4), effecting a spring pretension in the installed condition, has a cross-section running in a curved shape.

9. Fluid filter according to one of the claims 1 to 5, **characterised in that** the components which, on the one hand, have the sealing collar (15) and, on the other hand, the sealing surface (16) allocated to the sealing collar (15) are pressed closely together by the fluid pressure of the fluid to be filtered arising during operation of the filter.

10. Fluid filter according to claim 2, **characterised in that** it has a ring-shaped filter insert (4) and that it has a support dome (7) which extends into the interior of the filter insert (4), and that it has a return tube (10) for the fluid, which runs into the interior of the support dome (7), whereby the return tube (10) is equipped with the support dome (7) as a common component which has the bore (14).

11. Filter insert for a fluid filter according to one of the previous claims, whereby, apart from the filter insert, the filter has other filter components, and whereby in the filter a seal is formed by two sealing elements in the form of a sealing collar and a corresponding sealing surface, **characterised in that** the filter insert has one of the two sealing elements, whereby this sealing element provided on the filter insert is formed of uniform material from the component bearing the sealing element.

12. Filter insert according to claim 11, **characterised in that** it has end disks (6, 18) and a filter medium (5) arranged between them, whereby on at least one end disk (6, 18), a ring-shaped sealing collar (15) is provided for placement on further filter components, and whereby the sealing collar (15) has a narrow, also ring-shaped section, which is deformable under the operating conditions intended for the filter.

13. Filter insert according to claim 12, **characterised in that** the section adjoins the sealing collar (15) as a projection (20).

14. Filter insert according to claim 12 or 13, **characterised in that** the projection (20) is provided for sealing contact on the same filter component as the sealing collar (15).

## Revendications

1. Filtre à liquide (1) pour moteur à combustion interne, par exemple filtre à carburant ou à huile,
avec un collet d'étanchéité (15) prévu sur un premier composant du filtre et destiné à s'appuyer sur une surface d'étanchéité (16) prévue sur un second composant du filtre,
le collet d'étanchéité (15) étant constitué du même matériau que le premier composant du filtre et solidaire de celui-ci,
et présentant une partie étroite qui est déformable dans les conditions de fonctionnement prévues du filtre à liquide (1),
cette partie formant un prolongement (20) qui s'écarte du contour de base du collet d'étanchéité (15)
et étant conformée comme une lèvre séparée du contour de base par une gorge,
**caractérisé en ce que** le collet d'étanchéité (15) et le prolongement (20) s'appuient, en formant une double étanchéité, sur le même composant formant la surface d'étanchéité (16).

2. Filtre à liquide, en particulier filtre à carburant, selon la revendication 1, **caractérisé en ce qu'**il comprend un dispositif de purge d'air pour l'air chassé par l'élévation du niveau de liquide,
le dispositif de purge d'air comprenant un alésage (14) allant du côté brut du filtre (1) où se trouve le liquide non filtré, jusqu'à une conduite de retour, par exemple une conduite de retour vers le réservoir,
et **en ce qu'**un composant entourant l'alésage (14), par exemple le disque d'extrémité (6) d'un insert de filtre (4) annulaire interchangeable, assure l'étanchéité entre la face brute du filtre (1) et la face propre où se trouve le liquide filtré,
et **en ce que** ce composant comporte le collet d'étanchéité (15), qui en est solidaire par le matériau.

3. Filtre à liquide selon la revendication 2, **caractérisé en ce que** le disque d'extrémité (6) forme le collet d'étanchéité (15),
et **en ce qu'**il comporte un tuyau de retour (10) pour le liquide,
le disque d'extrémité (6) reposant sur le tuyau de retour (10),
et le tuyau de retour (10) formant la surface d'étanchéité (16) associée au collet d'étanchéité (15),
et le tuyau de retour (10) s'étendant à travers une ouverture (12) au centre du disque d'extrémité (6) et présentant l'alésage (14).

4. Filtre à liquide selon la revendication 3, **caractérisé en ce que** le tuyau de retour (10) possède un bord ou un épaulement formant la surface d'étanchéité (16) associée au collet d'étanchéité (15).

5. Filtre à liquide selon la revendication 2, **caractérisé en ce que** le disque d'extrémité (6) forme le collet d'étanchéité (15),
et **en ce qu'**il comporte un tuyau de retour (10) pour le liquide,
le disque d'extrémité (6) reposant sur le tuyau de retour (10),
et le tuyau de retour (10) formant la surface d'étanchéité (16) associée au collet d'étanchéité (15),
le disque d'extrémité (6) présentant l'alésage (14) et le tuyau de retour (10) présentant une ouverture d'entrée (17) pour le liquide communiquant avec l'alésage (14).

6. Filtre à liquide selon l'une des revendications précédentes, **caractérisé en ce que** le composant qui présente le collet d'étanchéité (15) ou le composant qui présente la surface d'étanchéité (16) associée au collet d'étanchéité (15), est contraint par ressort et supporté de manière mobile, de telle sorte que le collet d'étanchéité (15) et la surface d'étanchéité (16) qui lui correspond soient pressés l'un contre l'autre par la force du ressort.

7. Filtre à liquide selon la revendication 6, **caractérisé en ce que** le composant qui présente le collet d'étanchéité (15) ou le composant qui présente la surface d'étanchéité (16) associée au collet d'étanchéité (15) est conformé comme un ressort.

8. Filtre à liquide selon la revendication 7, **caractérisé en ce qu'**un disque d'extrémité (6) de l'insert de filtre (4), produisant une précontrainte par ressort dans l'état assemblé, présente une section courbe.

9. Filtre à liquide selon l'une des revendications 1 à 5, **caractérisé en ce que** les composants qui présentent, d'une part, le collet d'étanchéité (15) et, d'autre part, la surface d'étanchéité (16) associée au collet d'étanchéité (15) sont pressés l'un contre l'autre par la pression de liquide du liquide à filtrer régnant pendant le fonctionnement du filtre.

10. Filtre à liquide selon la revendication 2, **caractérisé en ce qu'**il comporte un insert de filtre (4) annulaire,
ainsi qu'un dôme de support (7) qui s'étend à l'intérieur de l'insert de filtre (4),
ainsi qu'un tuyau de retour (10) pour le liquide, qui passe à l'intérieur du dôme de support (7),
le tuyau de retour (10) formant avec le dôme de support (7) un seul composant qui comporte l'alésage (14).

11. Insert de filtre pour un filtre à liquide selon l'une des revendications précédentes,
dans lequel le filtre contient, outre l'insert de filtre, d'autres composants de filtre,
et dans lequel un joint d'étanchéité est formé dans le filtre par deux éléments d'étanchéité prenant la forme d'un collet d'étanchéité et d'une surface d'étanchéité correspondante,
**caractérisé en ce que** l'insert de filtre présente l'un des deux éléments d'étanchéité,
cet élément d'étanchéité prévu sur l'insert de filtre étant solidaire par le matériau du composant portant l'élément d'étanchéité.

12. Insert de filtre selon la revendication 11, **caractérisé en ce qu'**il comporte des disques d'extrémité (6, 18) et un support filtrant (5) disposé entre ceux-ci,
un collet d'étanchéité (15) annulaire étant prévu sur au moins un disque d'extrémité (6, 18) pour s'appuyer sur d'autres composants du filtre,
et le collet d'étanchéité (15) présentant une partie étroite, également annulaire, qui est déformable dans les conditions de fonctionnement prévues du filtre.

13. Insert de filtre selon la revendication 12, **caractérisé en ce que** cette partie forme un prolongement (20) du collet d'étanchéité (15).

14. Insert de filtre selon la revendication 12 ou 13, **caractérisé en ce que** le prolongement (20) est conçu pour s'appuyer de façon étanche sur le même composant de filtre que le collet d'étanchéité (15).
